# EUROPEAN PATENT SPECIFICATION

(11) **EP 3 099 045 B1**
(45) Date of publication and mention of the grant of the patent: **26.09.2018**
(21) Application number: 15202810.6
(22) Date of filing: 28.12.2015
(51) Int. Cl.: H04W 8/18, H04M 1/725, H04W 88/06

(54) **METHOD FOR MANAGING A PLURALITY OF PROFILES IN A SIM MODULE, AND CORRESPONDING UICC OR EMBEDDED UICC, AND COMPUTER PROGRAM PRODUCT**
VERFAHREN ZUR VERWALTUNG EINER VIELZAHL VON PROFILEN IN EINEM SIM-MODUL SOWIE ENTSPRECHENDE UICC ODER EINGEBETTETE UICC UND COMPUTERPROGRAMMPRODUKT
PROCÉDÉ DE GESTION D'UNE PLURALITÉ DE PROFILS DANS UN MODULE SIM, ET MODULE UICC OU UICC INTÉGRÉ CORRESPONDANT ET PRODUIT DE PROGRAMME INFORMATIQUE

(30) Priority: 27.05.2015 IT UB20151246
(43) Date of publication of application: 30.11.2016
(73) Proprietor: STMicroelectronics S.r.l., 20864 Agrate Brianza (MB) (IT)
(72) Inventor: CHICHIERCHIA, Maria, I-81010 Castel Campagnano (Caserta) (IT)
(74) Representative: Meindl, Tassilo

(56) References cited:
- EP-A1- 1 978 772
- WO-A1-2009/051377
- US-A1- 2013 095 794
- US-A1- 2013 344 918

## Description

### Technical Field

Embodiments of the present disclosure relate to techniques for managing a plurality of profiles in a SIM module interacting with a plurality of networks.

### Background

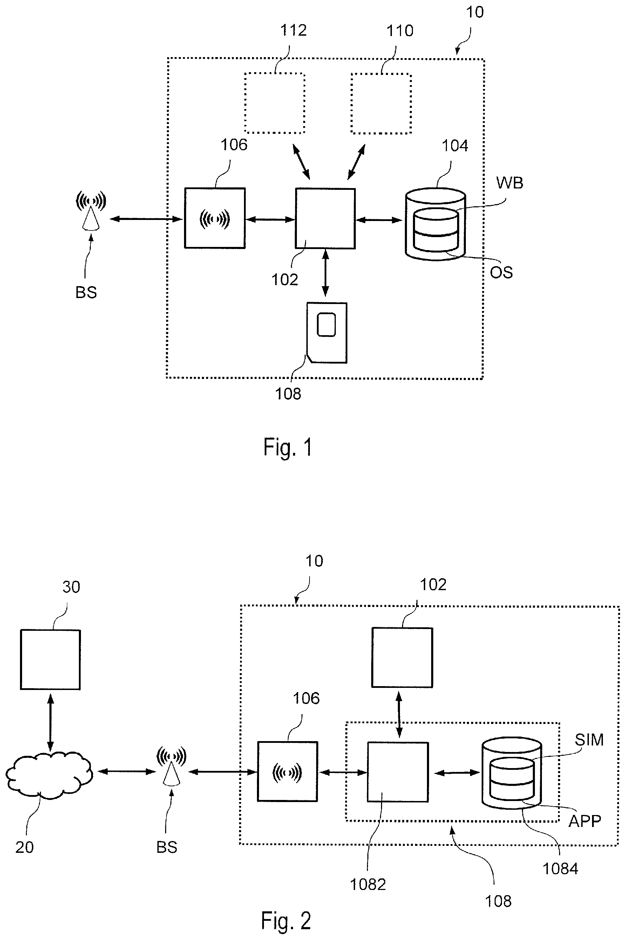

Figure 1 shows a possible architecture of a *user equipment* or *mobile equipment* 10, such as a mobile device, *e.g.* a smartphone or a tablet, or a mobile communication module usually to be used in embedded systems.

Generally, the device 10 comprises one or more processors 102 connected to one or more memories 104. The device 10 comprises moreover at least one mobile communication interface 106 for radio communication over radio channel.

For example, the mobile communication interface 106 may comprise a GSM (Global System for Mobile Communications), CDMA (Code Division Multiple Access) transceiver, W-CDMA (Wideband Code Division Multiple Access), UMTS (Universal Mobile Telecommunications System), HSPA (High-Speed Packet Access) and/or LTE (Long Term Evolution) transceiver.

A mobile device comprises often also a user interface 110, such as a touchscreen or keypad. Conversely, a communication module to be used, *e.g.,* in embedded systems, such as alarm systems, gas meters or other types of remote monitoring and/or control systems, often does not comprise a user interface 110, but a communication interface 112 in order to exchange data with a further processing unit of an embedded system. For example, in this case, the interface 112 may be a digital communication interface, such as a UART (Universal Asynchronous Receiver-Transmitter), SPI (Serial Peripheral Interface) and/or USB (Universal Serial Bus) communication interface. Generally, the processing unit 102 may also be directly the main processor of an embedded system. In this case the interface 112 may be used to exchange data with one or more sensors and/or actuators. For example, in this case, the interface 112 may be implemented by means of one or more analog interfaces and/or digital input/output ports of the processing unit 102.

In the memory 104 may be stored *e.g.* an operating system OS being executed by the processor 102 and which manages the general functions of the device 10, such as the management of the user interface 110 and/or the communication interface 112 and the establishment of a connection with the base station BS of serving network via the interface 106. The memory 104 may also contain applications being executed by the operating system OS. For example, in the case of a mobile device, the memory 104 often comprises a web browser application WB.

For establishing a connection with the base station BS, the device 10 is coupled to a processing unit 108 configured to manage the user identification. For example, usually a mobile device comprises a card holder for receiving a card comprising a Subscriber Identity Module (SIM), which is usually called *SIM card.* For example, nowadays is often used a *Universal Integrated Circuit Card* (UICC) 108, which is a smart card often used, but not limited, in GSM, UMTS, LTE, W-CDMA networks. The UICC ensures the integrity and security of all kinds of personal data and typically holds a few hundred kilobytes.

For example, a UICC 108 may contain a SIM application, a USIM application, an ISIM application, a CSIM application in order to provide more services to the card holder like the storage of a phone book and other applications.

Accordingly, the reference to a SIM module in the following of the present description is intended to include both 2G and/or 3G modules and applies also the case in which such a SIM module is provided on a SIM card. Moreover, the present description applies also to so called Machine-to-Machine (M2M) SIM modules.

Those of skill in the art will appreciate that the communication between the device 10 and the SIM module 108 follows the master/slave principle, in which the device 10 represents the master and the SIM module 108 the slave. For this reason, the device 10 sends given commands to the SIM module 108 and the SIM module acknowledges the command.

Specifically, the present application relates to a method for managing a plurality of profiles in a SIM module 108 according to the preamble of claim 1, which is known, e.g. from document WO 2009/051377 A1. As shown in Figure 2, a SIM module 108 often comprises one or more processor 1082, e.g. in the form of a co-processor, and one or more memories 1084 for executing applications stored in the memory 1084 of the module 108.

For example, the SIM module 108 may comprises in addition to the Subscriber Identity Module application (reference sign SIM in Figure 2) at least one further application APP. For example, this application APP may be configured to communicate (usually via the processor 102 and possibly the operating system OS) with the mobile communication interface 106 in order to send data to and/or receive data from the device 10 on behalf of a remote host 30.

For this purpose, the host 30 may be connected via a network 20 to the base station BS. Accordingly, connection between the host 30 and the UICC 108 may be established by means of the network 20, the base station BS and the communication interface 106.

Generally, the communication may be initiated by the host 30 or requested by the UICC 108.

For example, the application APP may be a web server application, which receives requests from the web browser WB of a mobile device 10 and obtains respective content from a remote host 30, such as a web server.

The application APP may also be an authentication application. In this case, the host 30 may send an authentication request to the UICC 108 via the device and the UICC 108 shall send an authentication response to the host 30 via the same device.

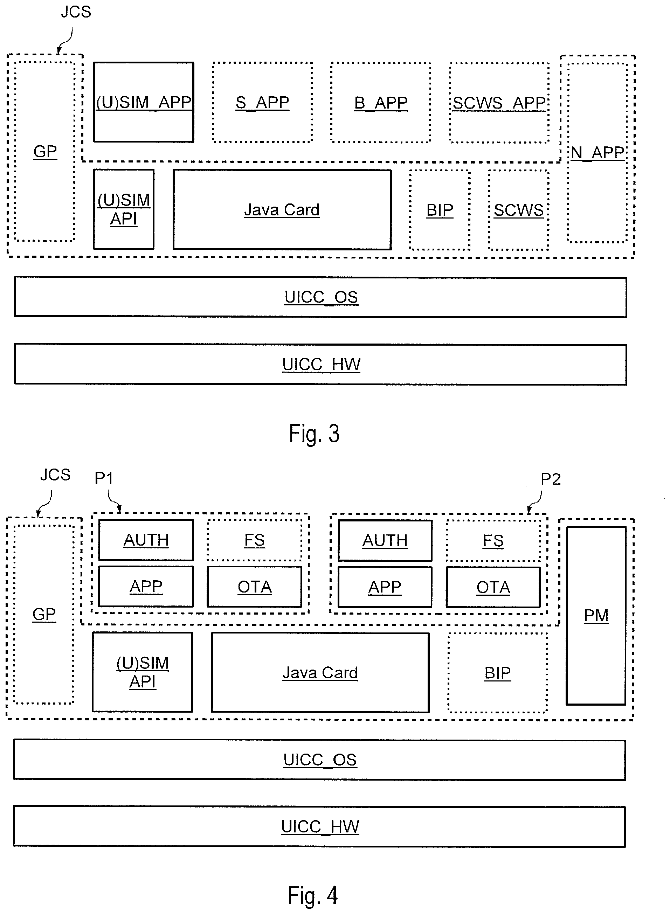

Figure 3 shows in this respect a typical architecture of the software layers of an UICC card.

Substantially, a UICC 108 comprises a hardware layer UICC_HW being represented (at least) by the processor 1082 and the memory 1084. On top of the hardware layer UICC_HW runs an operating system UICC_OS of the UICC card.

Generally, the operating system UICC_OS may manage a plurality of applications.

For example, in the example considered, a Java Card™ System JCS is executed by the operating system UICC_OS, which manages and runs applets, *i.e.* applications using the APIs (Application Programming Interface) provided by the Java Card System JCS.

For example, the Java Card System JCS may comprise a SIM and/or USIM API (identified with the reference sign (U)SIM API) which manages the basic Subscriber Identity Module commands and provides functions to higher level SIM and/or USIM applets (identified with the reference sign (U)SIM_APP).

The Java Card™ Platform (comprising the Virtual Machine, the runtime environment and the APIs) provides a JAVA™ runtime environment, which is particularly optimized for smart cards. This technology is well known to those skilled in the art, rendering a more detailed description herein superfluous.

Often in addition to the Java Card System JCS is also comprised a GlobalPlatform module GP according to the *"GlobalPlatform Card specification", e.g.* version 2.2.1. Also this standard is well known to those skilled in the art, rendering a more detailed description herein superfluous. Basically, the GP module provides features such as user authentication through secure channels, or the installation and remote management of the applets. For example, one of the possible encryption mechanisms managed by the GP module may be the SCP (Secure Channel Protocol) 80 specified in the technical specification ETSI TS 102 225 *"Smart Cards; Secured packet structure for UICC based applications", e.g.* version 9.0.0.

The above mentioned API functions may then be used by applets, such as the SIM or USIM applet (U)SIM_APP, a basic applet B_APP and/or a secure applet S_APP.

Generally, the UICC 108 may comprise not only custom applets but also native low level applications N_APP being executed directly by the operating system UICC_OS.

Figure 4 shows an embodiment of a multi-subscription SIM module 108.

In the example considered, the SIM module 108 supports at least two profiles P1 and P2 of two mobile network operators.

For example, each profile P1/P2 may be represented by a memory area in the SIM card for storing applets APP, such as a respective (U)SIM_APP applet for each profile P1/P2. In the memory area may also be stored the respective authentication data AUTH of the SIM card used to gain access to the mobile network of the mobile network operator. In various embodiments, each profile P1/P2 may also have associated a respective *Over The Air* (OTA) Key, which are usually used to encrypt (*e.g.* according to the SCP80 protocol) the remote management commands sent by a mobile network operator to a given SIM card.

For example, each profile P1/P2 may have associated a respective file system area FS, *e.g.* in order to store new applets APP data and/or for storing user data, such as the user's contact list, or a preferred roaming partner list.

Generally, while the profile data have been shown in the applet/application layer, each profile may also comprise applications and/or API in the Java Card System JCS. Moreover, the profile data may also include configuration data which influence directly the API layer.

In the example considered, the SIM module 108 comprises moreover a profile manager application PM. For example, in the embodiments considered, this profile manager PM is provided in the API layer. However, the profile manager PM may also be at the applet layer, or be distributed between the API and the applet layers.

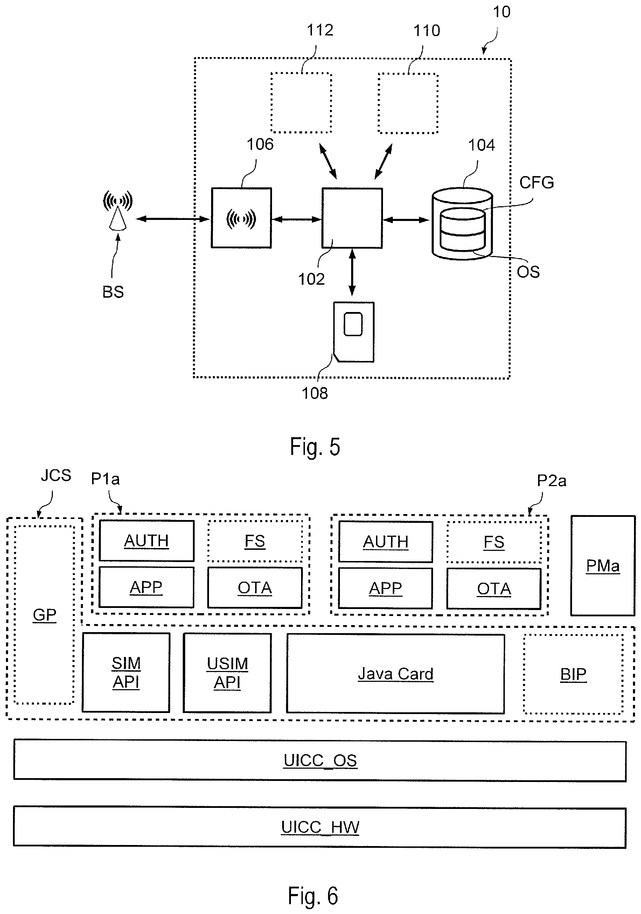

Figure 5 shows in this respect an example of a device 10, such as a mobile device or a mobile communication module, having (pre)installed the above described multi-subscription SIM module 108, *e.g.* in the form of an embedded SIM module, *e.g.* a eUICC (embedded UICC).

In the example considered, the memory 104 contains now also an application CFG configured for communicating with the profile manager PM of the SIM module 108 in order to manage the profiles installed in the SIM module 108. For example, the application CFG may communicate with the profile manager PM in order to select or enable one of the profiles P1/P2 installed in the SIM card 108.

For example, the SIM module 108 may have preinstalled the profiles of a plurality of mobile network operators and when the device 10 is started for the first time (or generally during a configuration phase), the user may activate by means of the application CFG one of the profiles P1/P2.

The application CFG may also be configured to install and/or update a profile in the SIM module 108. For example, the application CFG may access a remote host in order to download a list of mobile network operators. Next the application CFG may be used to subscribe to one of the mobile network operators and obtain the respective profile data, which may then be loaded on the SIM module 108 by means of the application CFG and the profile manager PM.

Generally, also a plurality of profiles could be present contemporaneously on the same SIM module 108.

For example, a given user could active one profile belonging to the plurality of profiles of different mobile network operators present on SIM module. In this case, the application CFG could also be used to select *on the fly* which of the available profiles should be enabled. Accordingly, in this case, only a single profile could be enabled and the other profiles would be disabled.

Generally, the profile manager PM may also communicate with a remote host (e.g. the host 30 shown in Figure 2) in order to install, update and/or enable a profile P1/P2 by means of remote management commands.

In this case, the profile manager application PM may be configured to communicate with the communication interface 106 in order to send data to and/or receive data from the remote host 30.

In this case, the SIM module 108 has installed at least a first profile P1, which permits that the device 10 connects to a base station BS by using the profile data P1, e.g. by using the authentication data AUTH of the profile P1. Next, the host 30 may sends one or more remote management commands to the profile manager PM in order to install or update a new profile P2. Once the new profile P2 has been installed or updated, the host 30 may send a remote management command to the profile manager PM in order to enable the profile P2.

For example, such a type of management may be suitable for automated systems, such as gas meters or any other type of remote monitoring and/or control systems. In this case, the application CFG may also not be required. However, the method could also be used for mobile devices, such as smart-phones or tablets. In fact, generally, the methods could also be combined and the SIM module 108 could be configured such that a profile may be installed, updated and/or enabled by means of an application installed in the device 10 and/or by means of a remote management command received from a remote host 30.

Accordingly, independently of the method used to install, update and/or enable profiles, a multi-subscription SIM module 108 may comprises a plurality of profiles, wherein each profile may comprise respective content.

### Summary

The inventor has observed that in the above described solutions, either the mobile device or a remote host has to communicate with the SIM module, in particular the profile manager, in order to enable a given profile in the SIM module.

Conversely, for certain applications it would be advantageously that the profile selection and enablement is performed directly within the SIM card, for example in order to switch automatically to a second profile without having to rely on SIM external event. Accordingly, the mobile device may also not know that the SIM module contains a plurality of profiles and the selection and enablement of the profile is performed directly within the SIM mobile as a function of given events, which may be signaled by the associated mobile device.

However, the profiles may also not use the same authentication mechanism. For example, the first profile may support 3G authentication scheme, such as UMTS, W-CDMA or LTE, while the second profile may support only 2G authentication scheme, e.g. GSM. Accordingly, when the SIM module switches to the second profile, 3G authentication is not applicable anymore. The inventor has observed that in this case may occur errors and the communication may be interrupted, because the associated mobile device does not know that 3G authentication is not available with the current serving network anymore.

Accordingly, when the SIM module switches to the second profile the SIM module has to be able to signal to the mobile device that now only 2G authentication should be used.

According to one or more embodiments, one or more of the above objects are achieved through a method having the features specifically set forth in the claims that follow. Embodiments moreover concerns a related SIM module as well as a corresponding related computer program product, loadable in the memory of at least one computer and including software code portions for performing the steps of the method when the product is run on a computer. As used herein, reference to such a computer program product is intended to be equivalent to reference to a computer-readable medium containing instructions for controlling a computer system to coordinate the performance of the method. Reference to "at least one computer" is evidently intended to highlight the possibility for the present disclosure to be implemented in a distributed/modular fashion.

The claims are an integral part of the technical teaching of the disclosure provided herein.

As mentioned in the foregoing, the present disclosure provides solutions for managing a plurality of profiles within a SIM module that interacts with a plurality of networks.

In various embodiments, the SIM module, such as a UICC, eUICC (embedded UICC) or M2M SIM, comprises a 2G authentication application, e.g. a SIM application for a GSM network, and a 3G authentication application, e.g. an USIM application for an UMTS or LTE network. Similarly, the 3G authentication applies also to the ISIM (IP Multimedia Services Identity Module) and CSIM (CDMA Subscriber Identity Module) applications, which may also be provided by a UICC.

In various embodiments, the SIM module comprises a plurality of profiles, wherein at least a first profile supports only 2G subscription and at least a second profile supports at least 3G subscription. As will be disclosed in the following, these profiles may be characterized by a respective International Mobile Subscriber Identity (IMSI), and a respective security or authentication key to be used by the 2G and/or authentication application.

In various embodiments, the SIM module may detecting a given event and selects one of the profiles as a function of the detected event. For example, the event may be the connection to a base station or mobile network associated with a given profile, or a predetermined command received from a remote host or the mobile device in which the SIM module is inserted.

As mentioned in the foregoing, at least a first profile supports only 2G authentication and at least a second profile supports at least 3G authentication. Accordingly, in order to ensure correct operation, the SIM module should disable the 3G function when a 2G profile is selected.

For example, in various embodiments, the SIM module comprise a file system, wherein the file system comprises a file in which is stored an Application Identifier of the 3G application. In this case, the SIM module may inhibit access to the Application Identifier of the 3G authentication application in this file, when the selected profile supports only 2G authentication. Conversely, the SIM module should enable access to the Application Identifier of the 3G authentication application in this file, when the selected profile supports at least 3G authentication. For example, the access to this information may be controlled by deleting/creating or renaming the file or modifying the section containing the Application Identifier of the 3G authentication application.

In various embodiments, the file system comprises also a first directory containing a file, in which is stored an IMSI associated with the 2G authentication application and an Application Dedicated File containing a file, in which is stored an IMSI associated with the 3G authentication application.

In this case, the IMSI associated with the 2G authentication application may be different from the IMSI associated with the 3G authentication application, i.e. the content of the above files may be different. In this way, when the SIM module supports only a single 2G profile and a single 3G profile, the switch between the profiles may be obtained directly with the above described downgrade or upgrade of the SIM module, i.e. without any modification of the above IMSI configuration files. However, generally, each profile may have associated a respective IMSI, and the respective IMSI of the selected profile may be written to the 2G and/or 3G configuration file based on the properties of the selected profile.

In various embodiments, the 2G authentication application and the 3G authentication application may perform authentication by means of at least one security key. In this case, also each profile may have has associated at least one respective security key, and the security key used by the 2G and 3G authentication applications to perform authentication may be replaced with the security key of the selected profile.

In various embodiments, once a profile has been selected, the SIM module is rebooted, thereby signaling to the mobile device in which the SIM module is inserted that the content of the SIM module should be reinitialized in order to interact with the profile just selected.

### Brief description of the figures

Embodiments of the present disclosure will now be described with reference to the annexed drawings, which are provided purely by way of non-limiting example and in which:
- Figures 1 to 5 have already been described in the foregoing;
- Figure 6 shows an embodiment of the software architecture of a SIM module containing a plurality of profiles in accordance with the present disclosure;
- Figures 7 and 8 show the authentication mechanisms implemented in a SIM module supporting GSM and UMST, respectively;

- Figure 9 shows the file and directory architecture of a 2G/3G SIM module,
- Figure 10a shows an embodiment of a SIM module having two 2G profiles;
- Figure 10b shows an embodiment of a SIM module having two 3G profiles;
- Figure 11 shows an embodiment of a SIM module which may be used with 2G and/or 3G mobile devices;
- Figure 12 shows an embodiment of a SIM module comprising a plurality of profile which may be used with 2G and/or 3G mobile devices;
- Figure 13a shows an embodiment of a SIM module with a 2G and a 3G profile connected to a 2G mobile device;
- Figure 13b shows an embodiment of a SIM module with a 2G and a 3G profile connected to a 3G mobile device;
- Figure 14a shows an embodiment of a SIM module with a 2G and a 3G profile connected to a 2G/3G mobile device, wherein the mobile device uses the 3G profile;
- Figure 14b shows an embodiment of a SIM module with a 2G and a 3G profile connected to a 2G/3G mobile device, wherein the mobile device is forced to use the 2G profile;
- Figure 15 shows an embodiment of a SIM module with a 2G and a 2G/3G profile connected to a 2G/3G mobile device; and
- Figure 16 shows an embodiment of a multi-subscription SIM module with a 2G, a 2G/3G and a 3G profile connected to a 2G/3G mobile device.

### Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

In the following Figures 6 to 16 parts, elements or components which have already been described with reference to Figures 1 to 5 are denoted by the same references previously used in such Figures; the description of such previously described elements will not be repeated in the following in order not to overburden the present detailed description.

As mentioned in the foregoing, the present disclosure provides solutions for managing a plurality of profiles within a SIM module 108a.

Figure 6 shows an embodiment, in which the SIM module 108a supports at least two profiles P1a and P2a of two mobile network operators and the software architecture is based on a Java Card System JCS described already with respect to Figures 3 and 4. For example, also in this case, a Java Card System JCS is executed by an operating system UICC_OS, which manages and runs applets, *i.e.* applications using the APIs (Application Programming Interface) provided by the Java Card System JCS. For example, the Java Card System JCS may comprise a SIM API and/or USIM API, which manages the basic Subscriber Identity Module commands and provides functions to higher level SIM and/or USIM applets. Moreover, the Java Card™ Platform may provide a JAVA™ runtime environment. In an embodiment, in addition to the Java Card System JCS may also be comprised a GlobalPlatform module GP according to the *"GlobalPlatform Card specification", e.g.* version 2.2.1. The above mentioned API functions may then be used by the applets, such as the SIM and/or USIM applets.

In an embodiment, each profile P1a/P2a may be represented by a memory area in the SIM card for storing respective content, such as applets APP, e.g. a respective (U)SIM applet for each profile P1a/P2a. In the memory area may also be stored the respective authentication data AUTH of the SIM card used to access the mobile network of the mobile network operator. In various embodiments, each profile P1a/P2a may also have associated a respective Over The Air (OTA) Key, which is usually used to encrypt (*e.g.* according to the SCP80 protocol) the remote management commands sent by a mobile network operator to a given SIM card. Usually, the authentication data AUTH are SIM specific as well as OTA keys used by a given mobile network operator.

In various embodiments, each profile P1a/P2a may have associated a respective file system area FS, *e.g.* in order to store user data, such as the user's contact list, or the above mentioned preferred roaming partner list and other services offered by network operator to own subscribers.

Generally, while the profile data have been shown in the applet/application layer, each profile may also comprise applications and/or API in the Java Card System JCS. Moreover, the profile data may also include configuration data which influence directly the API layer.

In the embodiment considered, the SIM module 108a comprises moreover a profile manager application PMa. For example, in the embodiment considered, the profile manager PMa is provided in the applet layer. However, the profile manager PMa may also be at the API layer, or be distributed between the API and the applet layers.

In various embodiments, the profile manager PMa is configured to enable either the profile P1a or the profile P2a. For example, the profile manager PMa may enable one of the profiles in response to a remote management command or due to another event detected by the profile manager PMa.

For example, this might be suitable for a virtual telecom operator, which indeed relies on two different network operators serving distinct regions. In this case, the profile manager may e.g. disable the first profile and enable the second profile when the profile manager PMa detects that roaming should be used for the first profile.

Similarly, the profile manager PMa may select one of the profiles P1a/P2a in order to reduce possible domestic or international roaming costs. For example, the first profile P1a may be for a first country and the second profile P2a may be for a second country.

Generally, also more than two profiles could be stored in the SIM module 108a and the profile manager could enable at each moment only one of these profiles as a function of a one or more predetermined events. For example, the profile manager PMa may detect the identification of the mobile network and determine which profile P1a/P2a should be enabled.

Accordingly, in various embodiments, the associated mobile device may even not know that the SIM module 108a comprises a plurality of profiles, because the complete management may be performed directly in the SIM module 108a. However, e.g. by configuring the events appropriately, the profile manager PMa could also switch the profiles based on a command received from the associated mobile device and/or a remote host.

The inventor has observed that a switch between profiles of the same technology version may be obtained quiet easily, e.g. by changing the International mobile subscriber identity (IMSI) and the authentication key, i.e. the profiles P1a and P2a may comprise at least a respective IMSI and authentication key.

However, this switch is not sufficient when the profiles are associated to mobile network operators using different technologies, such as a GSM and a UMTS network.

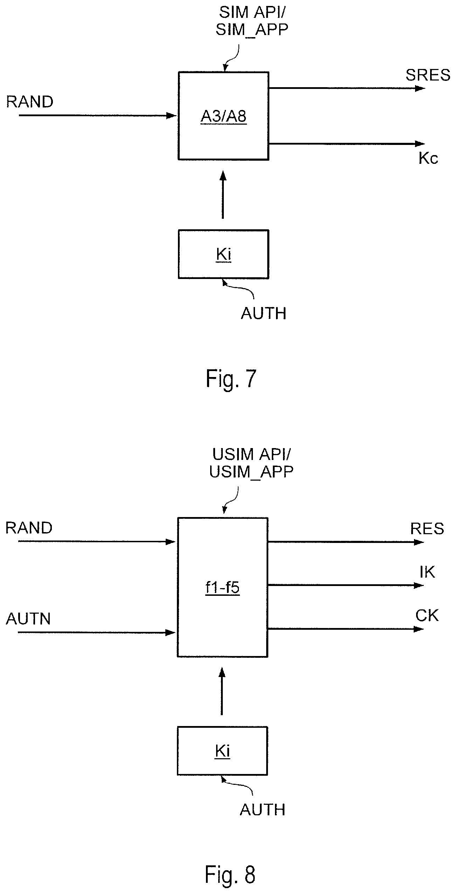

Figure 7 shows in this respect a GSM authentication scheme, which may be implemented in a SIM API and applet.

Generally, reference can be made to the technical specification *"Digital cellular telecommunications system (Phase 2+); Specification of the Subscriber Identity Module* - *Mobile Equipment (SIM* - *ME) interface; (GSM 11.11)",* which describes the structure of a SIM module in accordance with the GSM standard.

Substantially, in a GSM network, authentication is based on shared authentication data AUTH, in which each user has a secret authentication key, also called Ki. Specifically, the key Ki is stored both on the SIM module and in the Authentication Center (AuC) and is secret, i.e. the key Ki never leaves one of these locations. User authentication is based on the idea of checking whether the SIM module has access to the key Ki. Such access is verified by challenging the SIM module to do a computation that can only be done with the key Ki.

Specifically, in order to verify the SIM module 108a, a random key RAND consisting of 16 bytes (128 bits) is sent to the device 10 and the device 10 executes the function *"RUN GSM ALGORITHM"* (see e.g. point 8.16 of GSM 11.11), which is used to calculate by means of the A3 and the A8 algorithms the response SRES and the cipher key Kc, respectively. Specifically, the SRES (Signed Response) consists in 4 bytes (32 bits), which is sent back to the network where the correctness of the response may be checked. Conversely, the temporary cipher key Kc is used to encrypt the phone calls on the radio interface.

However, in order to run said command, the device 10 has to:
a) select the directory DF_{GSM} or any sub-directory under DF_{GSM} as the *Current Directory;* and
b) perform a CHV1 verification procedure.

Specifically, the directory DF_{GSM} of a SIM module 108a contains all files specific to a given GSM network, such as the file EF_{IMSI} in which is stored the IMSI number.

Conversely, the Card Holder Verification 1 (CHV1) (see e.g. point 11.3.1 of GSM 11.11) is used to check the Card Holder Verification status, which is required because each file may have its own specific access condition for each command.

For example, in order to authenticate a mobile device 10 to the service provider network, the mobile device 10 identifies itself to the network by determining the IMSI of the SIM module 108a, e.g. by reading the file EF_{IMSI}, and sending the IMSI to a given base station. The base station determines the home network of the SIM module 108a and forwards the IMSI to the AuC of the home network of the device. Based on the IMSI, the AuC of the home network determines the corresponding key Ki which is used along with a random challenge RAND to generate a session key Kc and the expected response to the challenge SRES. Next, the AuC of the home network sends the challenge RAND, the expected challenge response SRES and the cipher key Kc to the base station, which retains the expected response SRES and the cipher key Kc and sends the random key RAND to the mobile device 10. Using the shared secret key Ki and the random number RAND the mobile device 10, in particular the SIM module 108a, calculates on its own the response SRES and the session key Kc. The mobile device 10 responds to the base station with the response SRES, which the base station compares with the expected challenge response SRES received from the AuC in order to confirm the identity of the SIM module 108a.

Figure 8 shows the authentication scheme of a UMTS network, which may be implemented in a USIM API and applet.

In a UMTS or LTE network there is a 2-way authentication procedure. The serving network checks the subscriber's identity (similar to what happens in GSM) via a challenge-response technique while the terminal checks that the serving network has been authorized by the home network to do so. The latter part has been added for security reasons in order to permit that the terminal can check whether it is connected to a legitimate network.

Also in this case, authentication is based on a master key Ki shared between the AuC and the SIM module 108a, and the key Ki is keep secret and is 128 bits long. Apart mutual authentication keys for encryption and integrity checking are also derived. These are temporary keys and are derived from a permanent key Ki during each authentication event.

Moreover, 3G SIM module has also a directory structure comparable with the structure of a 2G SIM module. For example, the file EF_{IMSI} containing the IMSI number is stored for a UMTS SIM module in the *Application Dedicated File* (APF) for the Universal Subscriber Identity Module ADF_{USIM} contained in the application directory file EF_{DIR}.

Accordingly, the authentication protocol of a UMTS network follows many of the same network steps in the GSM protocol with some important changes.

Specifically, in order to authenticate a mobile device 10 to the service provider network, the mobile device 10 identifies itself to the network by sending the IMSI of the SIM module 108a to a given base station. The base station forwards the IMSI to the AuC of the home network of the device. Based on the IMSI the AuC of the home network determines the corresponding key Ki, which is used along with a random challenge RAND to generate a cipher key CK and the expected response to the challenge XRES. Moreover, the AuC also generates an authentication token AUTN as well as the integrity key IK. Next, the AuC of the home network sends the challenge RAND, the expected challenge response XRES, the cipher key CK, the authentication token AUTN and the integrity key IK to the base station, which only forwards the random key RAND and the authentication token AUTN to the mobile device 10.

The mobile device 10 in turn receives the authentication token AUTN and the random key RAND and forwards these codes to the SIM module 108a. The SIM module 108a processes, by means of functions called f1 - f5, the random key RAND in order to verify the authentication token AUTN. Moreover, using the shared secret key Ki and the random number RAND the SIM module 108a may calculate on its own the response RES and the cipher keys CK and Ik. The mobile device 10 responds to the base station with the response RES, which the base station compares with the expected challenge response XRES received from the AuC in order to confirm the identity of the SIM module 108a.

Generally, the GSM and UMTS standards permit that a SIM application and a USIM application may be implemented together on a single UICC.

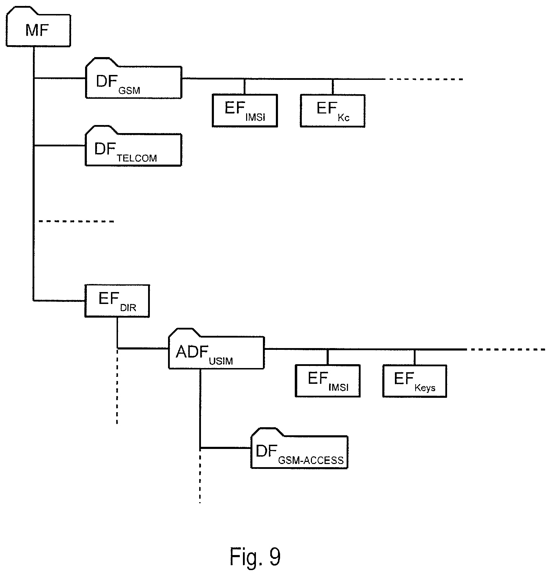

For example, as shown in Figure 9, a SIM module 108a, such as an UICC or a eUICC, may comprise a master file MF. In order to support 2G mobile device, the master file MF comprises a directory DF_{GSM} containing the GSM related files. The master file MF may contain also further directories, such as a directory DF_{TELECOM} containing service related information. Moreover, in order to support 3G mobile device, the master file MF may comprise an application directory file EF_{DIR} containing one or more ADF. For example, in the context of UMTS, the file EF_{DIR} contains an ADF for the Universal Subscriber Identity Module ADF_{USIM} containing the UMTS related files. The file ADF_{USIM} may also comprise further sub-directories, such as a directory DF_{GSM-ACCESS} containing the files required to access a GSM network through the USIM application. For example, the directory DF_{GSM-ACCESS} may contain a respective file EF_{Kc} containing the calculated GSM cipher Key Kc. For a more detailed description of the directory and file structure of a UICC, reference can be made, e.g., to the webpage http://www.in2eps.com/fo-uicc/tk-fo-uicc-mf.html. For example, similar to the ADF ADF_{USIM}, the SIM module may also comprise an ADF ADF_{ISIM} for the IP Multimedia Services Identity Module and an ADF ADF_{CSIM} for the CDMA Subscriber Identity Module.

Accordingly, a SIM module 108a may comprise both the directory DF_{GSM} containing the GSM related files and the Application Dedicated File for the Universal Subscriber Identity Module ADF_{USIM} in the application directory EF_{DIR} containing the UMTS related files.

However, the mobile device can neither active at the same time the SIM and the USIM applications nor switched from one to the other. Their activity solely depends on the type of mobile equipment 10 in which the respective SIM module 108a is inserted, i.e. a GSM (2G) mobile equipment 10 will always select the directory DF_{GSM} and activate the SIM application, while a UMTS (3G) mobile equipment 10 will select the ADF ADF_{USIM} and use the USIM application, or possibly the sub-directory DF_{GSM-ACCESS} if an access to a GSM network is required from the USIM application. Hence a direct way of interworking does not exist.

The inventor has observed that a switch between two 2G or two 3G profiles may be obtained quiet easily.

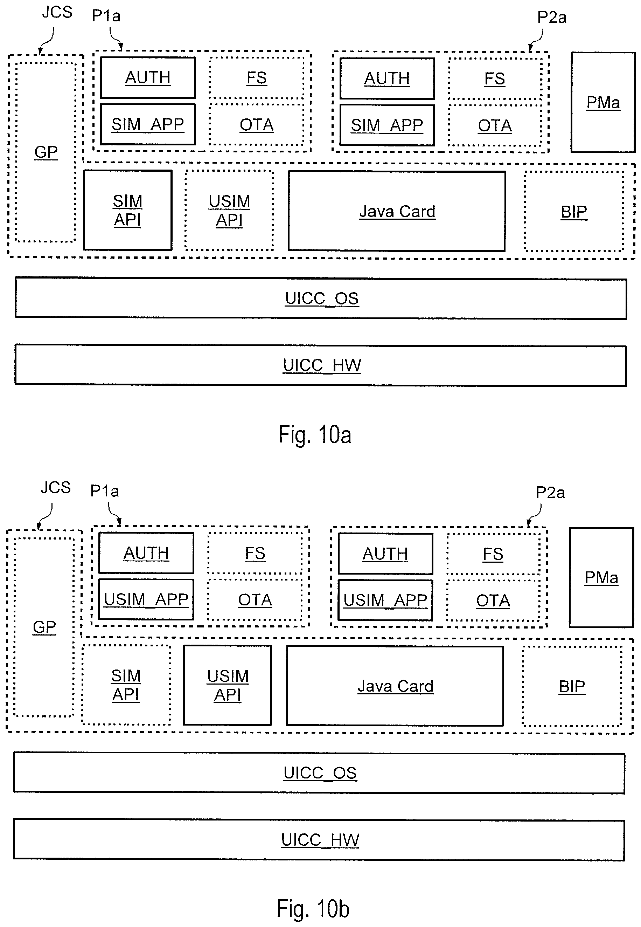

For example, in the embodiment shown in Figure 10a, each GSM profile P1a/P1b may have associated respective authentication data AUTH including at least a univocal IMSI and a respective authentication key Ki. In this case, the profile manager PMa could enable a different profile by replacing the content of the file EF_{IMSI} and recalculating the cipher key Kc.

Similarly, in the embodiment shown in Figure 10b, each UMTS profile may comprise at least an univocal IMSI and a respective authentication key Ki. In this case, the profile manager PMa could enable a different profile by replacing the content of the respective file EF_{IMSI} and recalculating the output cipher key Kc.

Conversely, this operation is not sufficient in case the SIM module 108a has to switch form a 3G profile to a 2G profile.

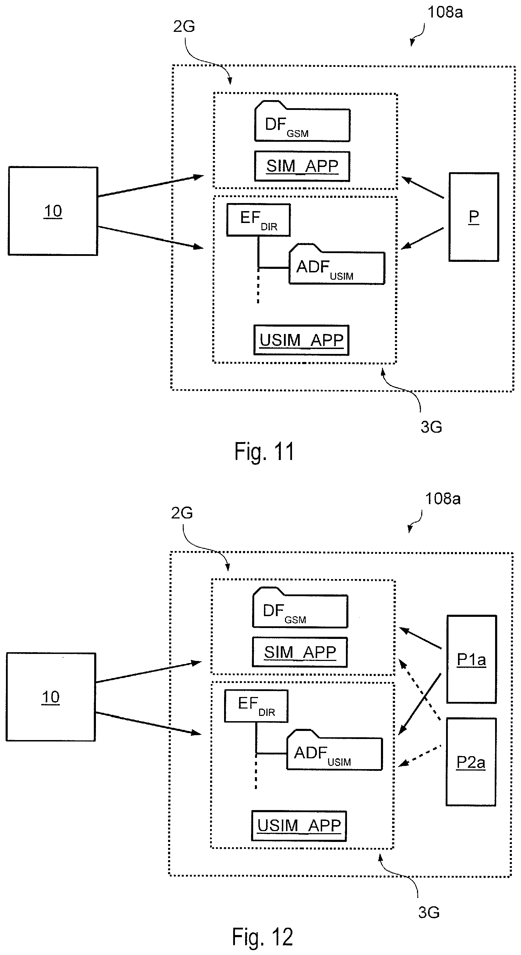

Figure 11 shows in this respect the communication between a mobile device 10 supporting 2G and 3G with a SIM module 108a comprising both a SIM applet and a USIM applet, which rely on the same profile P.

Specifically, after power on, a 3G capable mobile equipment or device 10 will automatically selects the USIM applet by accessing the file EF_{DIR}. Specifically, the file EF_{DIR} contains the Application Identifier (AID), i.e. the USIM application can only be selected by means of the AID selection. Accordingly, the mobile device 10 may access the USIM application only through the file EF_{DIR}.

Thus, in order to get network coverage the USIM needs to be authenticated and the authentication function may only be executed when the USIM application has been selected and activated, the current directory is the USIM ADF ADF_{USIM} (or any subdirectory under this ADF) and a successful PIN verification procedure has been performed.

Only if the file EF_{DIR} is not found or no USIM applications are listed in the file EF_{DRR}, a mobile device 10 supporting also 2G operation may try to select the SIM application and the directory DF_{GSM} as specified in the technical specification TS 51.011.

Specifically, a mobile device 10 will issue the APDU (Application Protocol Data Unit) commands with class byte set to 0x00 for the USIM application and with class byte set to 0xA0 for the SIM application.

Instead, Figures 12 shows a scenario in which the SIM module 108a comprises a SIM and a USIM application and at least two profiles P1a and P2a.

Specifically, in the embodiment considered, the profile manager PMa may enable either the profile P1a or the profile P2a. As mentioned before this may be achieved by replacing the respective configuration information, such as the IMSI and the security key Ki.

However, in this case, each profile P1a/P2a has to support both 2G and 3G operation.

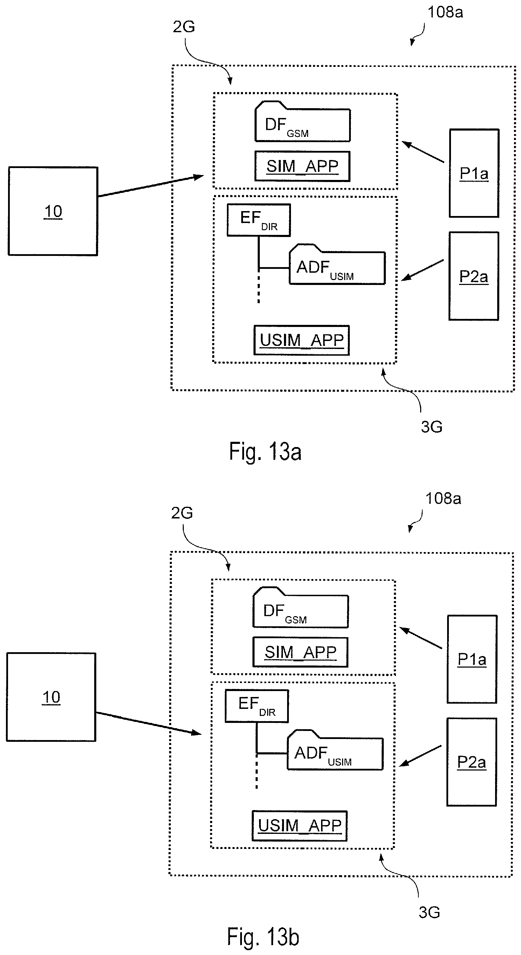

However, this is not always the case. For example, Figures 13a and 13b shows an embodiment, in which the profile P1a supports only 2G operation, i.e. may only be used with the SIM application, while the profile P2a supports only 3G operation, e.g. may only be used with the USIM application.

In this embodiment, the content of the directory DF_{GSM} and the SIM application using the key Ki of the profile P1a may represent directly the profile P1a, while the content of the ADF ADF_{USIM}, and the USIM application using the key Ki of the profile P2a may represent directly the profile P2a. Specifically, the profiles P1a and P2a are different with respect to each other at least concerning the IMSI and preferably also the secret key Ki and the algorithm used to compute the response.

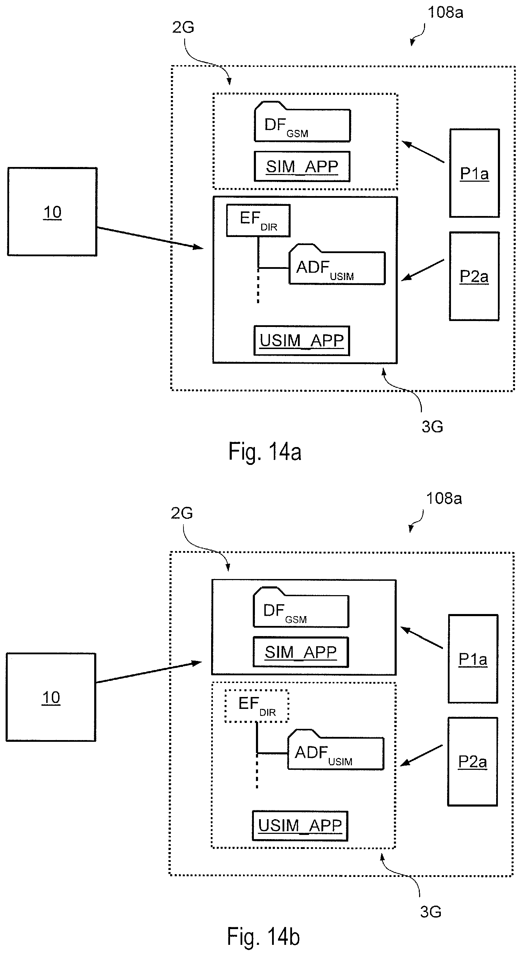

Accordingly, in the embodiment considered, a 2G mobile device 10 will automatically use the profile P1a (see Figure 14a), while a 3G device 10 will automatically use the profile P2a (see Figure 13b). However, also a mobile device 10 supporting both 2G and 3G, will use the USIM application and consequently the profile P2a.

In an embodiment, the switch between the profile P1 and P2 may thus be obtained by virtually upgrading or downgrading the SIM module 108a to a 2G or a 3G SIM module 108.

In various embodiments, this switch is not performed in the operating system level or the Java Card System JCS but at the applet level. Specifically, as mentioned in the foregoing, a 3G capable device 10 will try to access the file EF_{DIR} in order to obtain the Application Identifier (AID) for the USIM application. Thus, the profile manager PMa may force the device 10 to use the 2G profile by removing the USIM AID from the file EF_{DIR}.

For example, Figure 14a shows the exemplary case, in which the profile P2a is activated. In this case, the file EF_{DIR} is available and may be read by a device 10 supporting 3G. Accordingly, the device 10 may run the USIM applet in order to authenticate the SIM module with a 3G base station using the IMSI and security key Ki of the profile P2a (see also Figure 8). For example, in this case, the commands exchanged between the SIM card 108a and the device 10 are 3G commands (Class byte = 0x00).

Once the application PMa detects a given first trigger event, the application PMa switches to the profile P1a and downgrades the SIM module 108a. For example, in various embodiments, such a trigger may be implemented by using a so called STK applet which is started by means of a given trigger event.

Accordingly, once a trigger event takes place, the profile manager recovers the security key Ki of the profile P1a and deactivates the 3G subscription.

Generally, depending on the specific implementation of the SIM module, the change of the security key Ki may also not be required. For example, the SIM and USIM applications may use separate security keys Ki. In this case, the profile manager may merely downgrade (from 3G to 2G) or upgrade (from 2G to 3G) the SIM module. Conversely, in case the SIM and USIM applications use a common security keys Ki, the profile manager PMa may replace this common key with the security key of the profile which should be activated.

Specifically, in various embodiment, in order to downgrade, the SIM module 108a the profile manager PMa may delete or rename the file EF_{DIR}, or remove the section relating to the USIM applet from the file EF_{DIR}, i.e. generally the profile manager PMa inhibits access to the section relating to the USIM applet in the file EF_{DIR}.

In various embodiments, the profile manager applet PMa completes the subscription switch by rebooting the SIM module 108a, e.g. powering off and powering on the SIM module 108a, which forces to device 10 to reinitialize the content of the SIM module 108a. For example, usually the device 10 operates with a copy of the content of the SIM module. Accordingly, such a reboot of the SIM module 108a may be used to signal to the device 10 that a new copy of the content of the SIM module 108a should be obtained. Thus, the 2G/3G device 10 accesses again the SIM module 108a and determines that the file EF_{DIR} does not exist, is empty or does not contain a section for the USIM applet. At this point there is no way to select the USIM applet and the device 10 is forced to run the GSM initialization. In order to get network coverage the device 10 invokes the SIM application and selects the directory DF_{GSM} (See Figures 7 and 14b).

Similarly, once the application PMa detects a given second trigger event, such as a connection to a base station of a mobile network operator being associated with the profile P2a, the application PMa switches to the profile P2a and upgrades the SIM module 108a.

Specifically, in various embodiment, in order to upgrade the SIM module 108a, the profile manager PMa may create or rename the file EF_{DIR}, or introduce the section relating to the USIM applet in the file EF_{DIR}, i.e. generally the profile manager PMa enables access to the section relating to the USIM applet in the file EF_{DIR}.

In various embodiments, the profile manager applet PMa completes the subscription switch by rebooting the SIM module, e.g. powering off and powering on the SIM module 108a.

Next, the 2G/3G device 10 accesses again the SIM module 108a and determines that the file EF_{DIR} exists and reads the section for the USIM applet. At this point the device 10 runs the UMTS initialization. Specifically, in order to get network coverage the device 10 will selects the ADF ADF_{USIM} and run the USIM application (See Figures 8 and 14a).

Those of skilled in the art will appreciate that the above described mechanism of inhibiting/enabling access to the respective sections in the file EF_{DIR} may also be used for the ISIM and CSIM application. Moreover, the above embodiments may also be combined.

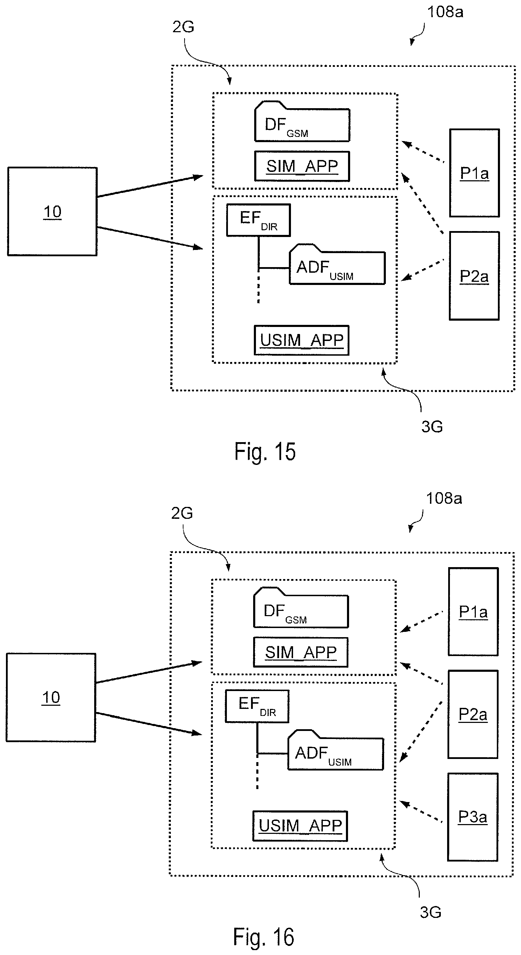

For example, Figure 15 shows an embodiment, wherein the profile P1a support only 2G, while the profile P2a supports both 2G, e.g. GSM, and 3G, e.g. UMTS. Accordingly, in this case:
a) when the profile P1a has to be enabled, the profile manager PMa downgrades the SIM module 108a, e.g. removes the file EF_{DIR}, and replaces the IMSI in the directory DF_{GSM} and the security key Ki with the respective data of the profile P1a; and
b) when the profile P2a has to be enabled, the profile manager PMa upgrades the SIM module 108a, e.g. creates the file EF_{DIR}, and replaces the IMSI in the directory DF_{GSM} and the security key Ki with the respective data of the profile P2a.

Conversely, Figure 16 shows an embodiment with three profiles, wherein the first profile P1a support only 2G, e.g. GSM, the second profile P2a supports both 2G and 3G, e.g. GSM and UMTS, and the third profile P3a support only 3G, e.g. W-CDMA. Accordingly, in this case:
a) when the profile P1a has to be enabled, the profile manager PMa downgrades the SIM module 108a, e.g. removes the file EF_{DIR}, and replaces the IMSI (at least in the directory DF_{GSM}) and the security key Ki with the respective data of the profile P1a; and
b) when the profile P2a has to be enabled, the profile manager PMa ensures that the SIM module 108a supports 3G, e.g. creates the file EF_{DIR}, and replaces the IMSI (both in the directory DF_{GSM} and the ADF ADF_{USIM} associated with the USIM application) and the security key Ki with the respective data of the profile P2a; and
c) when the profile P3a has to be enabled, the profile manager PMa ensures that the SIM module 108a supports 3G, e.g. creates the file EF_{DIR}, and replaces the IMSI (at least in the ADF ADF_{CSIM} associated with the CSIM application) and the security key Ki with the respective data of the profile P2a.

Accordingly, generally, the profile manager PMa is configured to detect a given event and select a given profile as a function of the event. Next, the profile manager PMa activates the selected profile by:
- in case the profile is a 2G profile, inhibiting access to the sections relating to the 3G applets (e.g. the USIM and CSIM applets) in the file EF_{DIR} and, if required, replacing the IMSI at least in the file EF_{IMSI} in the directory DF_{GSM} and the security key Ki with the respective data of the selected profile, and
- in case the profile is a 3G profile, enabling access to the section relating to the respective 3G applet (e.g. USIM or CSIM) in the file EF_{DIR} and, if required, replacing the IMSI at least in the file EF_{IMSI} in the respective ADF (e.g. ADF_{USIM} or ADF_{CSIM}) and the security key Ki with the respective data of the selected profile.

Finally, in order to force the associated device to reinitialize the content of the SIM module, the profile manager PMa reboots the SIM module 108a, e.g. by sending a respective reboot request to the operating system of the SIM module 108a.

The solutions described in the foregoing have numerous advantages, such as:
- the solutions may work on most SIM modules having a Java Card System, because the profile manager PMa may be implemented with an applet and no change of the operating system UICC_OS or the API layer may be required;
- the switch between the profiles may be managed directly within the SIM module 108a based on given trigger events, which in principle could also include predetermined commands received from a remote host 30 or the associated device 10;
- the solutions works with standard 2G and/or 3G devices.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A method for managing a plurality of profiles in a SIM module (108), wherein said SIM module (108a) is an UICC or embedded UICC, and comprises a 2G authentication application (SIM_APP), a 3G authentication application (USIM_APP) and a file system, wherein said file system comprises:
- a first file (EF_{DIR}) in which is stored an Application Identifier of said 3G authentication application (USIM_APP);
wherein said SIM module (108a) comprises a plurality of profiles (P1a, P2a), wherein at least a first profile supports only 2G authentication and at least a second profile supports at least 3G authentication, **characterized in that** said SIM module (108a) comprises a profile manager application (PMa), wherein the method comprises performing the following steps with said profile manager application (PMa):
- detecting a given event,
- selecting a profile among said plurality of profiles (P1a, P2a) as a function of said detected event, and
- in case said selected profile supports only 2G authentication, inhibiting access to the Application Identifier of said 3G authentication application (USIM_APP) in said first file (EF_{DIR}), and
- in case said selected profile supports at least 3G authentication, enabling access to the Application Identifier of said 3G authentication application (USIM_APP) in said first file (EF_{DIR}).

2. The method of Claim 1, wherein said file system comprises:
- a first directory (DF_{GSM}) containing a second file (EF_{IMSI}) in which is stored an International Mobile Subscriber Identity associated with said 2G authentication application (SIM_APP),
- an Application Dedicated File (ADF_{USIM}) containing a third file (EF_{IMSI}) in which is stored an International Mobile Subscriber Identity associated with said 3G authentication application (USIM_APP).

3. The method of Claim 2, wherein said International Mobile Subscriber Identity stored in said second file (EF_{IMSI}) is different from said International Mobile Subscriber Identity stored in said third file (EF_{IMSI}).

4. The method of Claim 2 or Claim 3, wherein each profile of said plurality of profiles (P1a, P2a) has associated a respective International Mobile Subscriber Identity, and wherein the method comprises:
- in case said selected profile supports only 2G authentication, writing the International Mobile Subscriber Identity of said selected profile at least in said second file (EF_{IMSI}) ;
- in case said selected profile supports at least 3G authentication, writing the International Mobile Subscriber Identity of said selected profile at least in said third file (EF_{IMSI}).

5. The method of any of the previous claims, wherein said 2G authentication application (SIM_APP) and said 3G authentication application (USIM_APP) perform authentication by means of at least one security key, wherein each profile of said plurality of profiles (P1a, P2a) has associated at least one respective security key, and wherein the method comprises:
- replacing said at least one security key used by said 2G authentication application (SIM_APP) and said 3G authentication application (USIM APP) to perform authentication with said at least one security key associated with the selected profile.

6. The method of any of the previous claims, wherein said given event is selected from at least one of the following:
- a predetermined command received from a remote host (30) or a mobile device (10) in which said SIM module (108a) is inserted;
- the connection to a base station associated with a given profile of said plurality of profiles (P1a, P2a) .

7. The method of any of the previous claims, comprising:
- once a profile among said plurality of profiles (P1a, P2a) has been selected, rebooting said SIM module (108a) .

8. The method of any of the previous claims, wherein said 2G authentication application is an authentication application for a Global System for Mobile Communications network, and said 3G authentication application is an authentication application for a Universal Mobile Telecommunications System, a Long Term Evolution or a Wideband Code Division Multiple Access network or an IP Multimedia Services Identity Module.

9. An UICC or embedded UICC (108a) comprising at least one processor (1082) and at least one memory (1084), wherein said at least one memory (1084) comprises a 2G authentication application (SIM_APP), a 3G authentication application (USIM_APP) and a file system, wherein said file system comprises:
- a first file (EF_{DIR}) in which is stored an Application Identifier of said 3G authentication application (USIM_APP);
wherein said at least one memory (1084) comprises a plurality of profiles (P1a, P2a), wherein at least a first profile supports only 2G authentication and at least a second profile supports at least 3G authentication, **characterized in that** said at least one memory (1084) comprises a profile manager application (PMa) and **in that** said profile manager application (PMa) is configured to implement the method of any of the previous claims.

10. A computer-program product comprising instructions that, when loaded into the memory of at least one processor and executed, implement the method according to any of Claims 1 to 8.

## Patentansprüche

1. Verfahren zur Verwaltung einer Vielzahl von Profilen in einem SIM-Modul (108), wobei das SIM-Modul (108a) eine UICC oder eine eingebettete UICC ist und eine 2G-Authentifizierungsanwendung (SIM_APP), eine 3G-Authentifizierungsanwendung (USIM_APP) und ein Dateisystem umfasst, wobei das Dateisystem umfasst:
- eine erste Datei (EF_{DIR}), in der eine Anwendungskennung der 3G-Authentifizierungsanwendung (USIM_APP) gespeichert ist;
wobei das SIM-Modul (108a) eine Vielzahl von Profilen (P1a, P2a) umfasst, wobei mindestens ein erstes Profil nur 2G-Authentifizierung unterstützt und mindestens ein zweites Profil mindestens 3G-Authentifizierung unterstützt, **dadurch gekennzeichnet, dass** das SIM-Modul (108a) eine Profilverwaltungsanwendung (PMa) umfasst, wobei das Verfahren das Ausführen der folgenden Schritte mit der Profilverwaltungsanwendung (PMa) umfasst:
- Erkennen eines gegebenen Ereignisses,
- Auswählen eines Profils aus der Vielzahl von Profilen (P1a, P2a) als eine Funktion des erkannten Ereignisses, und
- falls das ausgewählte Profil nur 2G-Authentifizierung unterstützt, Verhindern des Zugriff auf die Anwendungskennung der 3G-Authentifizierungsanwendung (USIM_APP) in der ersten Datei (EF_{DIR}), und
- falls das ausgewählte Profil mindestens eine 3G-Authentifizierung unterstützt, Ermöglichen des Zugriffs auf die Anwendungskennung der 3G-Authentifizierungsanwendung (USIM_APP) in der ersten Datei (EF_{DIR}) .

2. Verfahren nach Anspruch 1, wobei das Dateisystem umfasst:
- ein erstes Verzeichnis (DF_{GSM}), das eine zweite Datei (EF_{IMSI}) enthält, in der eine internationale Mobilteilnehmerkennung, die der 2G-Authentifizierungsanwendung (SIM_APP) zugeordnet ist, gespeichert ist,
- eine Anwendungs-dedizierte Datei (ADF_{USIM}), die eine dritte Datei (EF_{IMSI}) enthält, in der eine internationale Mobilteilnehmeridentität, die der 3G-Authentifizierungsanwendung (USIM_APP) zugeordnet ist, gespeichert ist.

3. Verfahren nach Anspruch 2, wobei die in der zweiten Datei (EF_{IMSI}) gespeicherte internationale Mobilteilnehmerkennung sich von der in der dritten Datei (EF_{IMSI}) gespeicherten internationalen Mobilteilnehmerkennung unterscheidet.

4. Verfahren nach Anspruch 2 oder Anspruch 3, wobei jedes Profil der Vielzahl von Profilen (P1a, P2a) eine jeweilige zugeordnete internationale Mobilteilnehmeridentität aufweist und wobei das Verfahren umfasst:
- falls das ausgewählte Profil nur eine 2G-Authentifizierung unterstützt, Schreiben der internationalen Mobilteilnehmeridentität des ausgewählten Profils mindestens in die zweite Datei (EF_{IMSI}) ;
- falls das ausgewählte Profil mindestens 3G-Authentifizierung unterstützt, Schreiben der internationalen Mobilteilnehmeridentität des ausgewählten Profils mindestens in die dritten Datei (EF_{IMSI}) .

5. Verfahren nach einem der vorhergehenden Ansprüche, wobei die 2G-Authentifizierungsanwendung (SIM_APP) und die 3G-Authentifizierungsanwendung (USIM_APP) eine Authentifizierung mittels mindestens eines Sicherheitsschlüssels durchführen, wobei jedes Profil der Vielzahl von Profilen (P1a, P2a) mindestens einen jeweiligen zugeordneten Sicherheitsschlüssel hat, und wobei das Verfahren umfasst:
- Ersetzen des mindestens einen Sicherheitsschlüssels, der von der 2G-Authentifizierungsanwendung (SIM_APP) und der 3G-Authentifizierungsanwendung (USIM_APP) verwendet wird, um eine Authentifizierung mit dem mindestens einen Sicherheitsschlüssel, der dem ausgewählten Profil zugeordnet ist, durchzuführen.

6. Verfahren nach einem der vorhergehenden Ansprüche, wobei das gegebene Ereignis aus mindestens einem des Folgenden ausgewählt ist:
- ein vorbestimmter Befehl, der von einem entfernten Host (30) oder einem mobilen Gerät (10), in dem das SIM-Modul (108a) eingesetzt ist, empfangen wird;
- die Verbindung zu einer Basisstation, die einem gegebenen Profil der Vielzahl von Profilen (P1a, P2a) zugeordnet ist.

7. Verfahren nach einem der vorhergehenden Ansprüche, umfassend:
- sobald ein Profil unter der Vielzahl von Profilen (P1a, P2a) ausgewählt wurde, Neustarten des SIM-Moduls (108a).

8. Verfahren nach einem der vorhergehenden Ansprüche, wobei die 2G-Authentifizierungsanwendung eine Authentifizierungsanwendung für ein Netzwerk des globalen Systems für mobile Kommunikation ist und die 3G-Authentifizierungsanwendung eine Authentifizierungsanwendung für ein universelles mobiles Telekommunikationssystem, eine Langzeit-Evolutions- oder ein Breitband-Codemultiplex-Vielfachzugriff-Netzwerk, oder ein IP-Multimediadienst-Identitätsmodul ist.

9. UICC oder eingebettete UICC (108a), umfassend mindestens einen Prozessor (1082) und mindestens einen Speicher (1084), wobei der mindestens eine Speicher (1084) eine 2G-Authentifizierungsanwendung (SIM_APP), eine 3G-Authentifizierungsanwendung (USIM_APP), und ein Dateisystem umfasst, wobei das Dateisystem umfasst:
- eine erste Datei (EF_{DIR}), in der eine Anwendungskennung der 3G-Authentifizierungsanwendung (USIM_APP) gespeichert ist;
wobei der mindestens eine Speicher (1084) eine Vielzahl von Profilen (P1a, P2a) umfasst, wobei mindestens ein erstes Profil nur 2G-Authentifizierung unterstützt und mindestens ein zweites Profil mindestens 3G-Authentifizierung unterstützt, **dadurch gekennzeichnet, dass** der mindestens eine Speicher (1084) eine Profilverwaltungsanwendung (PMa) umfasst und dass die Profilverwaltungsanwendung (PMa) konfiguriert ist, das Verfahren nach einem der vorhergehenden Ansprüche zu implementieren.

10. Computerprogrammprodukt, das Anweisungen umfasst, die, wenn sie in den Speicher mindestens eines Prozessors geladen und ausgeführt werden, das Verfahren nach einem der Ansprüche 1 bis 8 implementieren.

## Revendications

1. Procédé de gestion d'une pluralité de profils dans un module SIM (108), dans lequel ledit module SIM (108a) est une UICC ou une UICC intégrée, et comprend une application d'authentification 2G (SIM_APP), une application d'authentification 3G (USIM_APP) et un système de fichiers, dans lequel ledit système de fichiers comprend :
- un premier fichier (EF_{DIR}) dans lequel est stocké un identificateur d'application de ladite application d'authentification 3G (USIM -APP) ;
dans lequel ledit module SIM (108a) comprend une pluralité de profils (P1a, P2a), dans lesquels au moins un premier profil ne supporte qu'une authentification 2G et au moins un deuxième profil supporte au moins une authentification 3G, **caractérisé en ce que** ledit module SIM (108a) comprend une application de gestion de profils (PMa), dans lequel le procédé comprend l'exécution des étapes suivantes avec ladite application de gestion de profils (PMa) :
- détecter un événement donné,
- sélectionner un profil dans ladite pluralité de profils (P1a, P2a) en fonction dudit événement détecté, et
- dans le cas où ledit profil sélectionné ne supporte que l'authentification 2G, inhiber l'accès à l'identificateur d'application de ladite application d'authentification 3G (USIM_APP) dans ledit premier fichier (EF_{DIR}), et
- dans le cas où ledit profil sélectionné supporte au moins l'authentification 3G, permettre l'accès à l'identificateur d'application de ladite application d'authentification 3G (USIM_APP) dans ledit premier fichier (EF_{DIR}).

2. Procédé selon la revendication 1, dans lequel ledit système de fichiers comprend :
- un premier répertoire (DF_{GSM}) contenant un deuxième fichier (EF_{IMSI}) dans lequel est stockée une identité internationale d'abonnement mobile associée à ladite application d'authentification 2G (SIM_APP),
- un fichier dédié à une application (ADF_{USIM}) contenant un troisième fichier (EF_{IMSI}) dans lequel est stockée une identité internationale d'abonnement mobile associée à ladite application d'authentification 3G (USIM_APP).

3. Procédé selon la revendication 2, dans lequel ladite identité internationale d'abonnement mobile stockée dans ledit deuxième fichier (EF_{IMSI}) est différente de ladite identité internationale d'abonnement mobile stockée dans ledit troisième fichier (EF_{IMSI}).

4. Procédé selon la revendication 2 ou 3, dans lequel chaque profil de ladite pluralité de profils (P1a, P2a) a une identité internationale d'abonnement mobile respective associée, et dans lequel le procédé comprend :
- dans le cas où ledit profil sélectionné ne supporte que l'authentification 2G, écrire l'identité internationale d'abonnement mobile dudit profil sélectionné au moins dans ledit deuxième fichier (EF_{IMSI}) ;
- dans le cas où ledit profil sélectionné supporte au moins l'authentification 3G, écrire l'identité internationale d'abonnement mobile dudit profil sélectionné au moins dans ledit troisième fichier (EF_{IMSI}).

5. Procédé selon l'une quelconque des revendications précédentes, dans lequel ladite application d'authentification 2G (SIM_APP) et ladite application d'authentification 3G (USIM_APP) réalisent une authentification à l'aide d'au moins une clé de sécurité, dans lequel chaque profil de ladite pluralité de profils (P1a, P2a) a au moins une clé de sécurité respective, et dans lequel le procédé comprend :
- le remplacement de ladite au moins une clé de sécurité utilisée par ladite application d'authentification 2G (SIM_APP) et ladite application d'authentification 3G (USIM_APP) pour réaliser l'authentification par ladite au moins une clé de sécurité associée au profil sélectionné.

6. Procédé selon l'une quelconque des revendications précédentes, dans lequel ledit événement donné est choisi parmi au moins l'un des éléments suivants :
- une commande prédéterminée provenant d'un hôte distant (30) ou d'un appareil mobile (10) dans lequel ledit module SIM (108a) est inséré ;
- la connexion à une station de base associée à un profil donné de ladite pluralité de profils (P1a, P2a).

7. Procédé selon l'une quelconque des revendications précédentes, comprenant :
- une fois qu'un profil a été sélectionné parmi ladite pluralité de profils (P1a, P2a), redémarrer ledit module SIM (108a).

8. Procédé selon l'une quelconque des revendications précédentes, dans lequel ladite application d'authentification 2G est une application d'authentification pour un réseau du système GSM, et ladite application d'authentification 3G est une application d'authentification pour un réseau du système UMTS, un réseau de la technologie LTE ou un réseau AMRC à large bande, ou un module d'identité de services multimédia IP.

9. UICC ou UICC intégrée (108a) comprenant au moins un processeur (1082) et au moins une mémoire (1084), dans laquelle ladite au moins une mémoire (1084) comprend une application d'authentification 2G (SIM_APP), une application d'authentification 3G (USIM_APP) et un système de fichiers, dans lequel ledit système de fichiers comprend :
- un premier fichier (EF_{DIR}) dans lequel est stocké un identificateur d'application de ladite application d'authentification 3G (USIM -APP) ;
dans lequel ladite au moins une mémoire (1084) comprend une pluralité de profils (P1a, P2a), dans lesquels au moins un premier profil ne supporte qu'une authentification 2G et au moins un deuxième profil supporte au moins une authentification 3G, **caractérisée en ce que** ladite au moins une mémoire (1084) comprend une application de gestion de profils (PMa), et **en ce que** ladite application de gestion de profils (PMa) est configurée pour mettre en oeuvre le procédé de l'une quelconque des revendications précédentes.

10. Produit de programme informatique comprenant des instructions qui, lorsqu'elles sont chargées dans la mémoire d'au moins un processeur et sont exécutées, mettent en oeuvre le procédé selon l'une quelconque des revendications 1 à 8.
